(19)

Europäisches
Patentamt
European
Patent Office
Office européen
des brevets

(11) **EP 4 451 663 A1**

(12) **EUROPEAN PATENT APPLICATION**
published in accordance with Art. 153(4) EPC

(43) Date of publication:
**23.10.2024   Bulletin 2024/43**

(51) International Patent Classification (IPC):
**H04N 5/33** (2023.01)          **H04N 7/18** (2006.01)
**G02B 23/04** (2006.01)

(21) Application number: **22905938.1**

(22) Date of filing: **26.08.2022**

(86) International application number:
**PCT/CN2022/115090**

(87) International publication number:
**WO 2023/109180 (22.06.2023 Gazette 2023/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:   **14.12.2021   CN 202111531590**

(71) Applicant: **Infiray Technologies Co., Ltd.
Hefei, Anhui 230001 (CN)**

(72) Inventors:
• **HU, Feng
  Hefei National High-tech Industry Development
  District Anhui 230001 (CN)**
• **TU, Jinchao
  Hefei National High-tech Industry Development
  District Anhui 230001 (CN)**

(74) Representative: **Reiser & Partner
Patentanwälte mbB
Weinheimer Straße 102
69469 Weinheim (DE)**

(54) **DUAL-LIGHT FRONT AIMING APPARATUS AND INSTALLATION AND ADJUSTMENT METHOD THEREFOR, AND AIMING SYSTEM**

(57)     Disclosed in the embodiments of the present invention are a dual-light front aiming apparatus and an installation and adjustment method therefor, and an aiming system based on dual-light fusion. The dual-light front aiming apparatus comprises: an infrared lens assembly, which is used for collecting an infrared light signal in a target scenario; an image processing module, which converts the infrared light signal into an electric signal; a display module, which receives the electric signal sent by the image processing module, and displays a corresponding infrared image; and a spectroscope, wherein the spectroscope comprises a first light incident face and a second light incident face, which are arranged opposite each other; the first light incident face faces the incident direction of a visible light signal; the second light incident face faces the incident direction of a light signal of the infrared image on the display module; and at least part of the visible light signal passes through the spectroscope and fuses with the light signal of the infrared image, and then enters an aiming lens located behind the spectroscope.

FIG.3

EP 4 451 663 A1

## Description

## FIELD

The present application relates to the technical field of image processing, in particular to a dual-light front sighting device, a method for installing and adjusting the same, and a dual-light fusion-based sighting system.

## BACKGROUND

At present, visible-light or low-light sights with a single light path, as mainstream sighting devices on the market, allow for limited observation of a scene, and cannot work in some extremely harsh environments, such as dense smoke and dense fog. This defect can be made up by thermal imaging sights. For sight users, they are more concerned about how to capture and aim a target faster and more accurately in different environments, providing the possibility and space for applying the multispectral imaging technology to thermal imaging sighting devices.

## SUMMARY

In order to solve the existing technical problems, the embodiments of the present application provide a dual-light front sighting device with a visible light channel, a method for installing and adjusting the same, and a dual-light fusion-based sighting system.

In a first aspect, the present application provides a dual-light front sighting device, comprising an infrared lens assembly configured to acquire infrared light signals in a target scene, an image processing module configured to convert the infrared light signals into electrical signals, a display module configured to receive the electrical signals sent from the image processing module and display a corresponding infrared image based on the electrical signals, and a beamsplitter. The beamsplitter comprises a first light-entering surface and a second light-entering surface which are arranged opposite to each other; the first light-entering surface faces an incident direction of visible light signals, the second light-entering surface faces an incident direction of light signals of the infrared image on the display module, and the visible light signals at least partially pass through the beamsplitter to be fused with the light signals of the infrared image, and then enter a sight behind the beamsplitter.

The first light-entering surface of the beamsplitter is plated with a visible light anti-reflection coating, the second light-entering surface is plated with a visible light semi-transmission semi-reflection coating, and an incident light path of the infrared light signals is parallel to an incident light path of the visible light signals when the infrared light signals and the visible light signals are incidented to the dual-light front sighing device. The visible light signals enter the first light-entering surface, the infrared light signals enter the infrared lens assembly, the image processing module converts the infrared light signals received by the infrared lens assembly into the electrical signals and sends the electrical signals to the display module, the display module displays the corresponding infrared image based on the electrical signals, the infrared image displayed by the display module enters the second light-entering surface of the beamsplitter in a form of light signals, and the visible light signals pass through the beamsplitter to be fused with the light signals of the infrared image.

The first light-entering surface of the beamsplitter is plated with a beam-splitting coating allowing for transmission of visible light and reflection of infrared light, the second light-entering surface is plated with a visible light semi-transmission semi-reflection coating, the infrared lens assembly is disposed in a reflected light direction of the first light-entering surface of the beamsplitter, and an incident light path of the infrared light signals is coaxial with an incident light path of the visible light signals when the infrared light signals and the visible light signals are incidented to the dual-light front sighting device; and wherein the visible light signals and the infrared light signals enter the first light-entering surface along a same incident light path, the infrared light signals are reflected by the beam-splitting coating towards the infrared lens assembly, the infrared lens assembly receives the reflected infrared light signals, the image processing module converts the infrared light signals received by the infrared lens assembly into electrical signals and sends the electrical signals to the display module, the display module displays the corresponding infrared image based on the electrical signals, the infrared image displayed by the display module enters the second light-entering surface of the beamsplitter in a form of light signals, and the visible light signals pass through the beamsplitter to be fused with the light signals of the infrared image.

A first protective window is disposed in front of the beamsplitter, and the visible light signals enter the first light-entering surface through the first protective window, or, the infrared light signals and the visible light signals pass through the first protective window and enter the first light-entering surface; and/or a second protective window is disposed behind the beamsplitter, the visible light signals passing through the beamsplitter are fused with the light signals of the infrared image, then pass through the second protective window, and then enter the sight.

The sight is a visible-light sight, and the dual-light front sighting device is fixed in front of the visible-light sight by means of an installation assembly.

The beamsplitter comprises a first prism and a second prism, longitudinal cross-sections of the first prism and the second prism are right-trapezoidal, a slope of the first prism fits a slope of the second prism, the slope of the first prim function as the first light-entering surface of the beam-splitter, and the slope of the second prism function as the second light-entering surface of the beamsplitter; or the beamsplitter is a flat mirror and forms a specified angle of inclination with respect to an optical axis of visible light, a slope of the flat mirror facing the incident direction of the visible light signals function as the first light-entering surface, and a slope of the flat mirror away from the incident direction of the visible light signals function as the second light-entering surface.

The infrared lens assembly comprises an infrared objective lens and an infrared detector, and a focal length of the infrared objective lens and a diagonal size of a target surface of the infrared detector are determined depending on magnitudes required by a field of view; and The display module includes an OLED, the dual-light front sighting device further comprises a collimating lens between the OLED and the beamsplitter, and a focal length of the collimating lens and a diagonal size of a display region of the OLED are determined depending on a relation among the focal length of the infrared objective lens, the diagonal size of the target surface of the infrared detector, and a visual magnification.

The dual-light front sighting device further comprises an operation assembly. The operation assembly comprises a mode button, and the image processing module is switched to a corresponding image enhancement mode based on an operation performed on the mode button, performs enhancement on the infrared image according to the corresponding image enhancement mode, and sends the enhanced infrared image to the display model for display; and/or, the operation assembly further comprises a position calibration operation button configured to calibrate a position of the infrared image, and the position calibration operation button is configured to adjust movement of an image display region in horizontal and vertical directions in the display module; and/or, the operation assembly further comprises an image height calibration operation button configured to calibrate an image height of the infrared image, and the image height calibration operation button is configured to adjust an image display scale in the display module.

In a second aspect, the present application provides a dual-light fusion-based sighting system which comprises a visible-light sight and the dual-light front sighting device assembled in front of the visible-light sight. The dual-light front sighting device is any one of the dual-light front sighting devices described in any one of the embodiments of the present application.

In a third aspect, the present application provides a method for installing and adjusting the dual-light front sighting device. The method comprises:

determining the focal length of the infrared objective lens and the diagonal size of the target surface of the infrared detector depending on magnitudes required by a field of view;

according to a matching requirement of a dual-light field of view, determining the focal length of the collimating lens and the diagonal size of the display region of the OLED based on the relation among the focal length of the infrared objective lens, the diagonal size of the target surface of the infrared detector, and the visual magnification;

performing optical fusion using the beamsplitter such that the infrared image and the visible light image can be seen at the same time; and

calibrating the position and image height of the infrared image to allow the infrared image to match the visible light image.

The dual-light front sighting device provided by embodiments of the present application includes an infrared lens assembly configured to acquire infrared light signals in a target scene, an image processing module configured to convert the infrared light signals into electrical signals, a display module configured to receive the electrical signals sent from the image processing module and display a corresponding infrared image based on the electrical signals, and a beamsplitter; and the beamsplitter includes a first light-entering surface and a second light-entering surface which are arranged opposite to each other. The first light-entering surface faces an incident direction of visible light signals, the second light-entering surface faces an incident direction of light signals of the infrared image displayed on the display module, and the visible light signals at least partially pass through the beamsplitter to be fused with the light signals of the infrared image, and then enter a sight behind the beamsplitter. In such a way, in one aspect, the visible light image and the infrared image can be seen at the same time by additional arrangement of the dual-light front sighting device on the sight which has a single light path, so as to facilitate equipment change and update on the basis of the existing sights; and in another aspect, the sight with a single light path can achieve night vision and retaining its visible light channel, via the beamsplitter disposed to fuse the infrared light path and the visible light path and overlapping the infrared image on the visible light image, and moreover, the requirement of an application scene for infrared image enhancement can be met, such that a target can be captured and aimed faster and more accurately.

In the above embodiments, the method for installing and adjusting the dual-light front sighting device and the dual-light fusion-based sighting system including the dual-light front sighting device, together with the corresponding embodiments of the dual-light front sighting device, fall under the same conception and thus have the same technical effects as the corresponding embodiments of the dual-light front sighting device, the details of which will not be repeated here.

**BRIEF DESCRIPTION OF THE DRAWINGS**

FIG. 1 is a schematic diagram of a dual-light front sighting device according to an embodiment;

FIG. 2 is a schematic diagram showing the principle of a dual-light front sighting device according to an embodiment;

FIG. 3 is a schematic structural diagram of a dual-light front sighting device according to an embodiment;

FIG. 4 is a schematic structural diagram of a dual-light front sighting device according to another embodiment;

FIG. 5 is a schematic structural diagram of a dual-light front sighting device according to still another embodiment; and

FIG. 6 is a flowchart of a method for installing and adjusting a dual-light front sighting device according to an embodiment.

Description of Element Signs

11, infrared lens assembly; 110, infrared objective lens assembly; 112, infrared core module, 12, image processing module; 13, display module; 14, operation assembly; 15, beamsplitter; 15A, flat mirror; 161, first protective window; 162, second protective window; 17, installation assembly; 18, collimating lens; 19, power assembly; 20, sight.

## DESCRIPTION OF THE EMBODIMENTS

The following further illustrates the technical solutions of the present invention in detail in conjunction with the accompanying drawings of the specification and the specific embodiments.

Unless otherwise defined, all technical and scientific terms used herein have the same meaning as those commonly understood by those skilled in the art of the present invention. The terms are used in the specification of the present invention merely for the purpose of describing specific embodiments, and are not intended to limit the protection scope of the present invention. As used herein, the term "and/or" includes any or all combination(s) of one or more of the relevant items listed.

In the description of the present invention, it should be understood that the terms such as "center", "up", "down", "front", "back", "left", "right", "vertical", "horizontal", "top", "bottom", "inside", "outside" and the like indicate directional or positional relations based on the directional or positional relations as shown in the accompanying drawings only for the purpose of facilitating and simplifying the description of the present invention, rather than indicating or implying that a device or element referred to must have a specific direction or must be constructed and operated in a specific direction. Therefore, these terms should not be construed as limiting the present invention. In the description of the present invention, unless otherwise specified, "a plurality of" means two or more.

In the description of the present invention, it should be noted that, unless otherwise expressly specified and defined, the terms "install", "connect", and "link" should be understood in a broad sense. For example, connection may be fixed connection, detachable connection, or integral connection; or may be direct connection, or indirect connection via an intermediate medium, or internal communication between two elements. A person of ordinary skill in the art can understand the specific meaning of the above terms in the present invention in accordance with specific conditions.

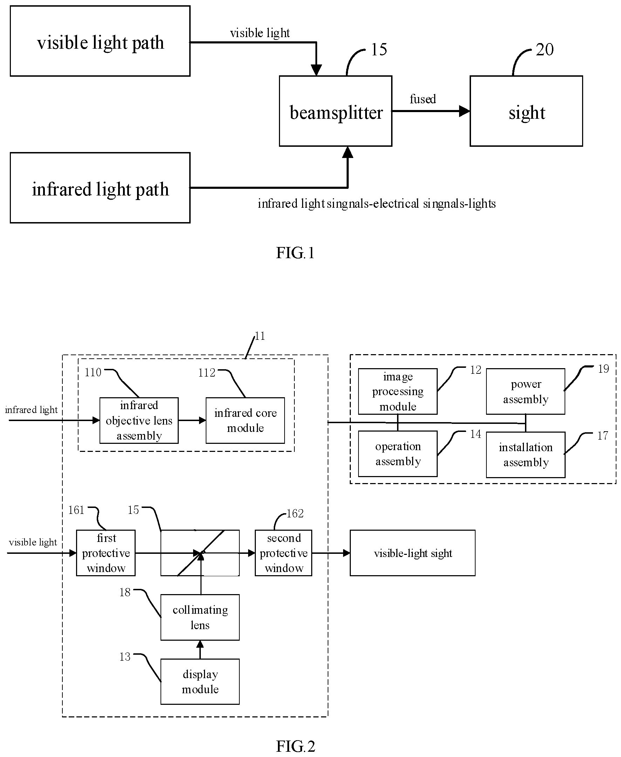

Referring to FIG. 1 and FIG. 2, each shows a schematic diagram of a dual-light front sighting device according to an embodiment of the present application. The dual-light front sighting device includes an infrared lens assembly 11 configured to acquire infrared light signals in a target scene, an image processing module 12 configured to convert the infrared light signals into electrical signals, a display module 13 configured to receive the electrical signals sent from the image processing module 12 and display a corresponding infrared image based on the electrical signals, and a beamsplitter 15. The beamsplitter 15 includes a first light-entering surface and a second light-entering surface which are arranged opposite to each other. The first light-entering surface faces an incident direction of visible light signals, and the second light-entering surface faces an incident direction of light signals of the infrared image displayed on the display module 13, such that the visible light signals can at least partially pass through the beamsplitter 15 to be fused with the light signals of the infrared image, and then enter a sight 20 behind the beamsplitter 15.

In the above embodiment, the dual-light front sighting device includes the infrared lens assembly 11 configured to acquire the infrared light signals in the target scene, the image processing module 12 configured to convert the infrared light signals into the electrical signals, the display module 13 configured to receive the electrical signals sent from the image processing module 12 and display the corresponding infrared image based on the electrical signals, and the beamsplitter 15. The first light-entering surface of the beamsplitter 15 faces the incident direction of the visible light signals; and the second light-entering surface faces the incident direction of the light signals of the infrared image displayed on the display module 13. In such a way, the infrared lens assembly 11, the image processing module 12, the display module 13, and the beamsplitter 15 are jointly formed an infrared light path, in which the infrared light signals in the target field of view are acquired, converted to the electrical signals and then to the light signals, and further enter the second light-entering surface of the beamsplitter 15 in the form of light signals. Furthermore, the first light-entering surface of the beamsplitter 15 faces the incident direction of the visible light signals, which are enter the beamsplitter 15 and at least partially pass through the beamsplitter 15 to form a visible light path, and the beamsplitter 15 is disposed both in the infrared light path and the visible light path. In one aspect, the visible light image and the infrared image can be seen at the same time by additional arrangement of the dual-light front sighting device on the sight 20 which has a single light path, so as to facilitate equipment change and update on the basis of the existing sight 20; and in another aspect, the sight 20 with a single light path can achieve night vision and retaining its visible light channel, via the beamsplitter 15 disposed to fuse the infrared light path and the visible light path and overlapping the infrared image on the visible light image, and moreover, the requirement of an application scene for infrared image enhancement can be met, such that a target can be captured and aimed faster and more accurately.

Optionally, the dual-light front sighting device is integrated into a whole which is separated and independent from the sight 20. In such a way, the dual-light front sighting device can function as an independent accessory of the existing sight 20, such that the sight 20 with one signal light path can achieve night vision and with the visible light channel retained by direct additional arrangement of the accessory on the basis of the sight 20. Optionally, the structure in the dual-light front sighting device for receiving the infrared light signals and the visible light signals and fusing the visible light signals with the infrared image mainly includes the infrared lens assembly 11, the beamsplitter 15, the display module 13, which are integrated into a whole that is separated and independent from the sight 20, and other structures in the dual-light front sighting device may be integrated into another whole. In such a way, the dual-light front sighting device can be still designed as an independent accessory of the existing sight 20, and a plurality of separate functional modules may be formed, thereby optimizing the flexibility of additional arrangement positions of other structures of the dual-light front sighting device on the existing sight 20.

Optionally, the first light-entering surface of the beamsplitter 15 is plated with a visible light anti-reflection coating, the second light-entering surface is plated with a visible light semi-transmission semi-reflection coating. When the infrared light signals and the visible light signals incidence to the dual-light front sighing device, the incident path of the infrared light signals is parallel to the incident path of the visible light signals. The visible light signals enter the first light-entering surface; the infrared light signals first enter the infrared lens assembly 11, then the image processing module 12 converts the infrared light signals received by the infrared lens assembly 11 into the electrical signals and sends the electrical signals to the display module 13; further the display module 13

displays the corresponding infrared image based on the electrical signals; thus the infrared image displayed by the display module 13 can enter the second light-entering surface of the beamsplitter 15 in a form of light signals; and at this time the visible light signals which pass through the beamsplitter 15 can fused with the light signals of the infrared image. Optionally, the infrared lens assembly 11 and the beamsplitter 15 may be disposed at an interval in a height direction of the dual-light front sighting device perpendicular to the incident light path; and the infrared light incident direction in which the infrared light signals enter the infrared lens assembly 11 in the dual-light front sighting device is parallel to the visible light incident direction in which the visible light signals enter the first light-entering surface of the beamsplitter 15. The infrared lens assembly 11 includes an infrared objective lens assembly 110 and an infrared core module 112. The infrared objective lens assembly 110 is configured to receive or converge infrared light signal radiation from a target scene, and transmits the infrared light signal radiation to the infrared core module 112; and the infrared core module 112 is configured to receive the infrared light signal radiation transmitted from the infrared objective lens assembly 110 and convert the infrared light signal radiation into image information in the form of the electrical signals. The infrared objective lens assembly 110 and the beamsplitter 15 are vertically arranged in the height direction of the dual-light front sighting device; the incident path in which the infrared light signals enter the infrared objective lens assembly 110 is parallel to the incident path in which the visible light signals enter the beamsplitter 15. The infrared light signals are converted into the electrical signals by means of the infrared objective lens assembly 11 and the image processing module 12; the image processing module 12 sends the electrical signals to the display module 13; and the display module 13 display an infrared image based on the electrical signals to convert the electrical signals into the light signals, which are then coupled with the visible light at the beamsplitter 15. In such a way, during the processing of the infrared light signals into the electrical signals and then into the light signals via the infrared light path, an independent image enhancement mode can be provided to the infrared image by means of the image processing module 12; the infrared image after image enhancement processing is displayed by the display module 13 and is then fused with the visible light image to form fusing images which can highlight more target detail features. Therefore, the visible light channel can be maintained in the visible light path by means of the beamsplitter 15, such that independent image enhancement of the application scene can be achieved for the infrared image without affecting the normally observed effect of visible light.

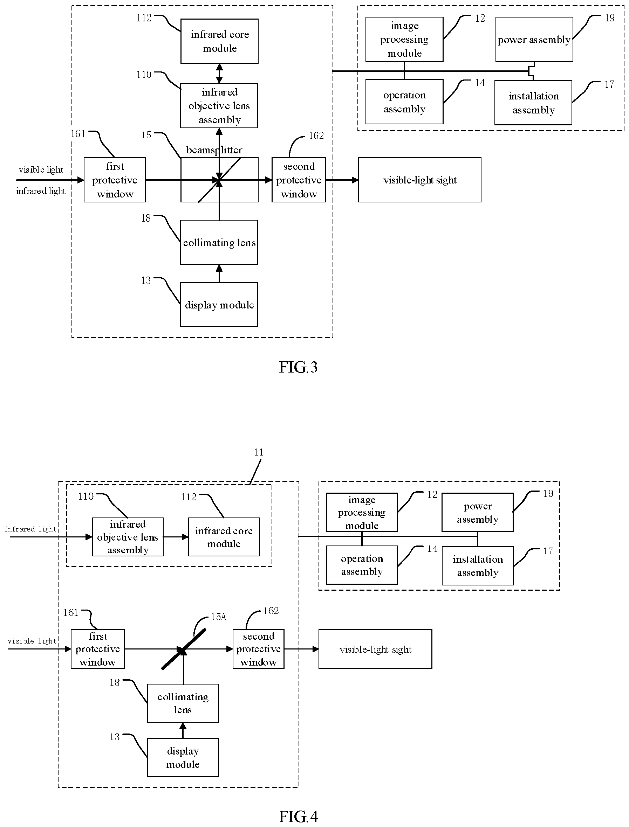

Optionally, the structure of the dual-light front sighting device is not limited to the embodiment shown in FIG. 1, under the technical conception that the visible light channel is retained by means of the beamsplitter 15, the infrared light signals undergo photoelectric conversion and electro-optic conversion in sequence to provide the independent image enhancement mode to the infrared image, and the beamsplitter 15 is disposed in the visible light path and the infrared light path to achieve fusion of the two. Referring to FIG. 3, in some embodiments, the first light-entering surface of the beamsplitter 15 is plated with a beam-splitting coating allowing for transmission of visible light and reflection of infrared light; the second light-entering surface is plated with a visible light semi-transmission semi-reflection coating; the infrared lens assembly 11 is disposed in a reflected light direction of the first light-entering surface of the beamsplitter 15; and during incidence to the dual-light front sighting device, the incident light path of the infrared light signals is coaxial with the incident light path of the visible light signals. In this embodiment, the visible light signals and the infrared light signals enter the first light-entering surface along the same incident path; the infrared light signals are reflected by the beam-splitting coating of the beamsplitter 15 towards the infrared lens assembly 11; the infrared lens assembly 11 receives the reflected infrared light signals; the image processing module 12 converts the infrared light signals received by the infrared lens assembly 11 into the electrical signals and sends the electrical signals to the display module 13; the display module 13 displays the corresponding infrared image based on the electrical signals; the infrared image displayed by the display module 13 enters the second light-entering surface of the beamsplitter 15 in a form of light signals; and finally the visible light signals passed through the beamsplitter 15 are fused with the light signals of the infrared image. The incident path in which the infrared light signals enter the dual-light front sighting device is the same as the incident path in which the visible light signals enter the dual-light front sighting device. The infrared light signals and the visible light signals enter the first light-entering surface of the beamsplitter 15 along the same incident path. By the arrangement of the beam-splitting coating, the infrared light signals and the visible light signals are split into two light paths. Here, the infrared light signals are reflected towards the infrared objective lens assembly 110, which converges the infrared light signals and transmits the converged infrared light signals to the infrared core module 112, and the infrared light signals are converted into electrical signals by the infrared core module 112 and sent to the display module 13, which then displays the infrared image that enters the second light-entering surface of the beamsplitter 15 in the form of light signals. In the mean time, the visible light signals pass through the beamsplitter 15. Therefore, the visible light signals passed through the beamsplitter 15 are fused with the light signals of the infrared image displayed by the display module 13 and entered the second light-entering surface of the beamsplitter 15.

In the above embodiment, the infrared light signals and the visible light signals share the same incident path and thus have the same field of view in the optical axis, thereby increasing the accuracy of optical fusion as compared to the solution that the incident path in which the infrared light signals enter the dual-light front sighting device is parallel to the incident path in which the visible light signals enter the dual-light front sighting device. Moreover, the infrared lens module 11 and the display module 13 may be disposed on two opposite sides of an incident optical axis, which allows for a more compact overall structure of the dual-light front sighting device, and reduces the overall size of the dual-light front sighting device, in particular, the size of the dual-light front sighting device in a direction perpendicular to the incident optical axis, such that the sight 20 with the additionally arranged dual-light front sighting device can meet the use requirement for light weight.

Optionally, a first protective window 161 is disposed in front of the beamsplitter 15, the visible light signals enter the first light-entering surface through the first protective window 161, or the infrared light signals and the visible light signals both enter the first light-entering surface through the first protective window 161. In another optional example, a second protective window 162 is disposed behind the beamsplitter 15, the visible light signals passing through the beamsplitter 15 are fused with the light signals of the infrared image, then pass through the second protective window 162, and enter the sight 20. The arrangement of the first protective window 161 and the second protective window 162 can protect optical components from water and dust.

Optionally, the sight 20 is a visible-light sight, and the dual-light front sighting device is fixed in front of the visible-light sight by means of an installation assembly 17. Here, the component for fusing the infrared light signals with the visible light signals is formed into a whole independent from the visible-light sight, and is then fixed in front of the visible-light sight by means of the installation assembly 17, such that upgrading and reconstruction can be conducted on the basis of the visible-light sight to achieve the purpose of fusion imaging based on multiple light paths.

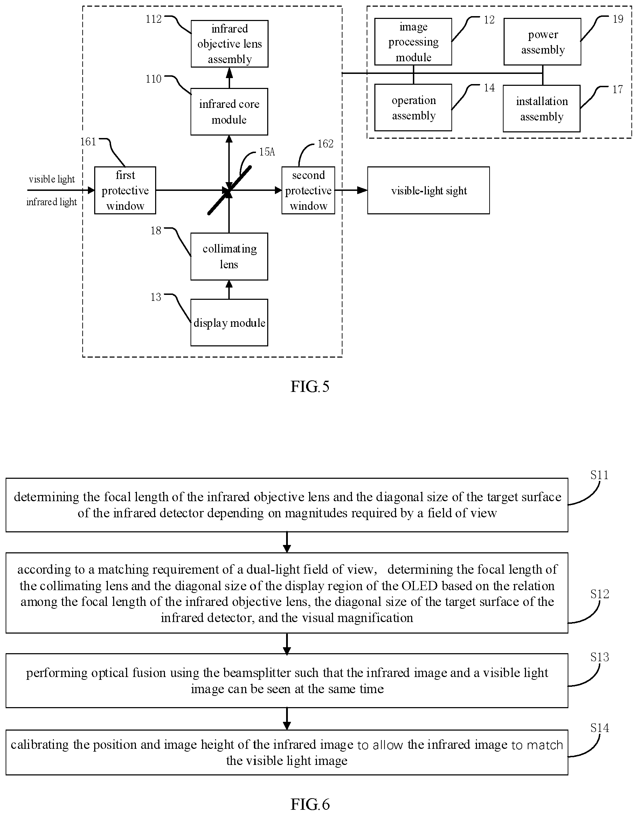

Optionally, the beamsplitter 15 includes a first prism and a second prism, longitudinal cross-sections of the first prism and the second prism are right-trapezoidal, the slope of the first prism fits the slope of the second prism, the slope of the first prim functions as the first light-entering surface of the beam-splitter 15, and the slope of the second prism functions as the second light-entering surface of the beamsplitter 15. In a specific embodiment, the overall external contour of the beamsplitter 15 is rectangular; the first light-entering surface and the second light-entering surface are obliquely connected between the upper and lower surfaces of the beamsplitter 15; and the inclination angles of the first and second light-entering surfaces may be designed to adjust the light transmission or reflection ratio of the corresponding light-entering surface with respect to light rays incident thereto. In an optional embodiment, referring to FIG. 4 and FIG. 5, the beamsplitter 15 is a flat mirror 15A and is disposed to form a specified angle of inclination with respect to the optical axis of visible light signals, a slope of the flat mirror 15A facing the incident direction of the visible light signals functions as the first light-entering surface, and a slope of the flat mirror 15A away from the incident direction of the visible light signals functions as the second light-entering surface. The flat mirror 15A may be disposed obliquely at an angle of 45° with respect to the optical axis of the visible light signals. The 45° slope of the flat mirror 15A facing the first protective window 161 functions as the first light-entering surface of the beamsplitter 15, and the 45° slope of the flat mirror facing the second protective window 162 functions as the second light-entering surface of the beamsplitter 15. When the flat mirror 15A is used as the beamsplitter 15, in one aspect, the space required for installing the beamsplitter 15 can be reduced to favourably reduce the overall size of the dual-light front sighting device, and in another aspect, the inclination angle of the flat mirror 15A can be conveniently changed to adjust the light transmission or reflection ratio of the corresponding light-entering surface with respect to light ray incident thereto.

Optionally, the infrared lens assembly 11 includes an infrared objective lens and an infrared detector. The focal length of the infrared objective lens and the diagonal size of the target surface of the infrared detector are determined depending on magnitudes required by a field of view. The display module 13 includes an OLED, the dual-light front sighting device further includes a collimating lens 18 between the OLED and the beamsplitter 15, and a focal length of the collimating lens 18 and a diagonal size of a display region of the OLED are determined depending on a relation among the focal length of the infrared objective lens, the diagonal size of the target surface of the infrared detector, and a visual magnification. Here, the OLED is configured to display the infrared image; the collimating lens 18 is configured to magnify the infrared image displayed by the OLED; and the infrared image displayed by the OLED then enters the second light-entering surface of the beamsplitter 15 in the form of light signals, and thus is fused with the visible light signals passing through the beamsplitter 15. In an optional example, the infrared objective lens assembly 110 mainly includes an infrared objective lens, and the infrared core module 112 mainly includes an infrared detector. The focal length of the infrared objective lens is $f_{objective}$, and the diagonal size of the target surface of the infrared detector is $l_{detector}$. According to the matching requirements of the dual-light field of view, the visual magnifica-

$$\Gamma = \frac{f_{objective}}{f_{ocular}} \times \frac{l_{OLED}}{l_{detector}} = 1$$

tion is set to , and it can be determined that the value of the focal length $f_{ocular}$ of the collimating lens 18, and the value of the diagonal size $l_{OLED}$ of the selected OLED display region. In such a way, the parameter configuration of the infrared objective lens, the infrared detector and the OLED can be optimized based on the relation among the focal length of the infrared objective lens, the diagonal size of the target surface of the infrared detector, and the visual magnification, and according to the magnitudes required by the field of view and the matching requirement of the dual-light fields of view, such that a better dual-light fusion effect can be achieved for the infrared image and the visible light image based on the optimized parameter configuration.

In some embodiments, the dual-light front sighting device further includes an operation assembly 14. The operation assembly 14 includes a mode button, and the image processing module 12 is switched to a corresponding image enhancement mode based on an operation performed on the mode button, performs enhancement on the infrared image according to the corresponding image enhancement mode, and sends the enhanced infrared image to the display model 13 for display. For example, the image enhancement mode includes a thermal image pseudo-color enhancement mode and a thermal image contour enhancement mode. By means of the mode button, a user may select the image enhancement mode to meet image enhancement requirements in different scenes to better highlight a target, thereby can capturing and aiming a target faster and more accurately based on the enhanced infrared image. Optionally, the operation assembly 14 further includes a position calibration operation button configured to calibrate the position of the infrared image. The position calibration operation button is configured to adjust movement of an image display region in horizontal and vertical directions in the display module 13. During the selection and configuration of the OLED, a certain range of displacement may be set in pixel to allow for movement of the OLED display region in the horizontal or vertical direction to correct the error of the optical axis. Optionally, the operation assembly 14 further includes an image height calibration operation button configured to calibrate the image height of the infrared image, and the image height calibration operation button is configured to adjust the image display scale in the display module 13. During the selection and configuration of the OLED, a certain range of zooming may be set in pixel to allow for zooming-up/down of the display region of the OLED by taking a display center as a circle center, such that the image height of the infrared image can completely match the image height of the visible image.

Optionally, the dual-light front sighting device further includes a power assembly 19, which includes a rechargeable battery configured to supply power to the dual-light front sighting device.

The dual-light front sighting device provided by the embodiments of the present application has at least the following characteristics:

> first, the dual-light front sighting device designed as an independent accessory of the existing sight 20 can be installed on a visible-light sight, so as to provide a dual-light front sighting method which endows the visible-light sight with the infrared imaging function while retaining the visible light channel, allowing for observation and sighting in various harsh environments;

second, the design of the dual-light front sighting device can achieve dual-light fusion and facilitate scene enhancement to reveal more detail features and better highlight the target in the fused image; and

third, the dual-light front sighting device is designed as a front sight, with simple optical structure, small size, and light weight.

Referring to FIG. 6, in another aspect, this embodiment further provides a method for installing and adjusting a dual-light front sighting device, which is the dual-light front sighting device described in the foregoing embodiments. The method includes the following steps:

S11, determining the focal length of the infrared objective lens and the diagonal size of the target surface of the infrared detector depending on magnitudes required by a field of view;

S12, according to a matching requirement of a dual-light field of view, determining the focal length of the collimating lens and the diagonal size of the display region of the OLED based on the relation among the focal length of the infrared objective lens, the diagonal size of the target surface of the infrared detector, and the visual magnification;

S13, performing optical fusion using the beamsplitter such that the infrared image and a visible light image can be seen at the same time; and

S 14, calibrating the position and image height of the infrared image to allow the infrared image to match the visible light image.

According to the method for installing and adjusting the dual-light front sighting device provided by the above embodiment, first, the selection and parameter configuration of the components forming the dual-light front sighting device are optimized. The visual magnification of an optical system is ensured to be 1 by matching the focal length of the infrared objective lens, the diagonal size of the target surface of the infrared detector, the focal length of the collimating lens 18, and the diagonal size of the OLED display region. Second, the beamsplitter 15 is disposed to retain the visible light channel and overlap the infrared image on the visible light image; then, the position of the infrared image is calibrated; next, the image height of the infrared image is calibrated; and finally, in use, a user may select from the functions of different image enhancement modes provided by the image processing module 12 to enhance the details of the infrared image, thereby can capturing and aiming the target faster and more accurately by the enhanced infrared image. The selection and parameter configuration of the components forming the dual-light front sighting device are optimized by the steps of: according to the magnitudes required by the field of view and the matching requirement of the dual-light fields of view, optimizing the calculations of the parameter configuration of the infrared objective lens, the infrared detector and the OLED based on the relation among the focal length of the infrared objective lens, the diagonal size of the target surface of the infrared detector, and the visual magnification; and selecting the infrared objective lens, the infrared detector, the collimating lens 18, and the OLED based on optimized configuration parameters obtained by calculation, thereby achieving a better dual-light fusion effect on the infrared image and the visible light image.

In another aspect, this embodiment further provides a dual-light fusion-based sighting system. The sighting system includes a visible-light sight and the dual-light front sighting device assembled in front of the visible-light sight. Here, the dual-light front sighting device is the dual-light front sighting device described in the foregoing embodiments. In an optional specific example, the working principle of the sighting system is as follows: first, the dual-light front sighting device is installed and fixed in place in front of the visible-light sight by means of the installation assembly 17; then, the dual-light front sighting device is powered by the power assembly 19 and started up by the operation assembly 14, and at this point, the infrared core module 12 begins to receive infrared radiation converged by the infrared objective lens assembly 110 and convert the infrared radiation into target infrared image signals; and next, the image processing module 12 completes enhancement of the target infrared image to highlight target display details, and sends the enhanced infrared image to the OLED for display. At this point, the image enhancement mode (for example, the thermal image pseudo-color enhancement and the thermal image contour enhancement) may be adjusted in combination with a target background environment to explore more target detail features; next, by means of the beamsplitter 15, the infrared image magnified by the collimating lens 18 is observed while the visible light image transmitted from the protective window and the beamsplitter 15 is retained; and finally, the position and image height of the infrared image are calibrated by means of the operation assembly 14, such that the dual-light fusion-based sighting system is implemented in relation to the infrared image and the visible light image.

The above description only provides the specific embodiments of the present invention, but the protection scope of the present invention is not limited thereto. Any variation or substitution readily conceivable by a person skilled in the art within the technical scope of the present invention should be included within the protection scope of the present invention. The protection scope of the present invention should be subjected to the protection scope of the claims.

## Claims

1. A dual-light front sighting device, comprising an infrared lens assembly (11) configured to acquire infrared light signals in a target scene, an image processing module (12) configured to convert the infrared light signals into electrical signals, a display module (13) configured to receive the electrical signals sent from the image processing module (12) and display a corresponding infrared image based on the electrical signals, and a beamsplitter (15); wherein the beamsplitter (15) comprises a first light-entering surface and a second light-entering surface which are arranged opposite to each other; the first light-entering surface faces an incident direction of visible light signals, the second light-entering surface faces an incident direction of light signals of the infrared image on the display module, and the visible light signals at least partially pass through the beamsplitter (15) to be fused with the light signals of the infrared image, and then enter a sight (20) behind the beamsplitter (15).

2. The dual-light front sighting device according to claim 1, wherein the first light-entering surface of the beamsplitter (15) is plated with a visible light anti-reflection coating, the second light-entering surface is plated with a visible light semi-transmission semi-reflection coating, and an incident light path of the infrared light signals is parallel to an incident light path of the visible light signals when the infrared light signals and the visible light signals are incidented to the dual-light front sighing device; and wherein the visible light signals enter the first light-entering surface, the infrared light signals enter the infrared lens assembly (11), the image processing module (12) converts the infrared light signals received by the infrared lens assembly (11) into the electrical signals and sends the electrical signals to the display module (13), the display module (13) displays the corresponding infrared image based on the electrical signals, the infrared image displayed by the display module (13) enters the second light-entering surface of the beamsplitter (15) in a form of light signals, and the visible light signals pass through the beamsplitter (15) to be fused with the light signals of the infrared image.

3. The dual-light front sighting device according to claim 1, wherein the first light-entering surface of the beamsplitter (15) is plated with a beam-splitting coating allowing for transmission of visible light and reflection of infrared light, the second light-entering surface is plated with a visible light semi-transmission semi-reflection coating, the infrared lens assembly (11) is disposed in a reflected light direction of the first light-entering surface of the beamsplitter (15), and an incident light path of the infrared light signals is coaxial with an incident light path of the visible light signals when the infrared light signals and the visible light signals are incidented to the dual-light front sighting device; and wherein the visible light signals and the infrared light signals enter the first light-entering surface along a same incident light path, the infrared light signals are reflected by the beam-splitting coating towards the infrared lens assembly (11), the infrared lens assembly (11) receives the reflected infrared light signals, the image processing module (12) converts the infrared light signals received by the infrared lens assembly (11) into electrical signals and sends the electrical signals to the display module (13), the display module (13) displays the corresponding infrared image based on the electrical signals, the infrared image displayed by the display module (13) enters the second light-entering surface of the beamsplitter (15) in a form of light signals, and the visible light signals pass through the beamsplitter (15) to be fused with the light signals of the infrared image.

4. The dual-light front sighting device according to any one of claims 1 to 3, wherein a first protective window (161) is disposed in front of the beamsplitter (15), and the visible light signals enter the first light-entering surface through the first protective window (161), or, the infrared light signals and the visible light signals pass through the first protective window (161) and enter the first light-entering surface; and/or a second protective window (162) is disposed behind the beamsplitter (15), the visible light signals passing through the beamsplitter (15) are fused with the light signals of the infrared image, then pass through the second protective window (162), and then enter the sight (20).

5. The dual-light front sighting device according to claim 4, wherein the sight (20) is a visible-light sight, and the dual-light front sighting device is fixed in front of the visible-light sight by means of an installation assembly (17).

6. The dual-light front sighting device according to any one of claims 1 to 3, wherein the beamsplitter (15) comprises a first prism and a second prism, longitudinal cross-sections of the first prism and the second prism are right-trapezoidal, a slope of the first prism fits a slope of the second prism, the slope of the first prim function as the first light-entering surface of the beam-splitter (15), and the slope of the second prism function as the second light-entering surface of the beamsplitter (15); or

the beamsplitter (15) is a flat mirror and forms a specified angle of inclination with respect to an optical axis of visible light, a slope of the flat mirror facing the incident direction of the visible light signals function as the first light-entering surface, and a slope of the flat mirror away from the incident direction of the visible light signals function as the second light-entering surface.

7. The dual-light front sighting device according to claim 1, wherein the infrared lens assembly (11) comprises an infrared objective lens and an infrared detector, and a focal length of the infrared objective lens and a diagonal size of a target surface of the infrared detector are determined depending on magnitudes required by a field of view; and
the display module (13) includes an OLED, the dual-light front sighting device further comprises a collimating lens (18) between the OLED and the beamsplitter (15), and a focal length of the collimating lens (18) and a diagonal size of a display region of the OLED are determined depending on a relation among the focal length of the infrared objective lens, the diagonal size of the target surface of the infrared detector, and a visual magnification.

8. The dual-light front sighting device according to claim 1, further comprising an operation assembly (14), wherein

the operation assembly (14) comprises a mode button, and the image processing module (12) is switched to a corresponding image enhancement mode based on an operation performed on the mode button, performs enhancement on the infrared image according to the corresponding image enhancement mode, and sends the enhanced infrared image to the display model (13) for display; and/or,
the operation assembly (14) further comprises a position calibration operation button configured to calibrate a position of the infrared image, and the position calibration operation button is configured to adjust movement of an image display region in horizontal and vertical directions in the display module (13); and/or,
the operation assembly (14) further comprises an image height calibration operation button configured to calibrate an image height of the infrared image, and the image height calibration operation button is configured to adjust an image display scale in the display module (13).

9. A dual-light fusion-based sighting system, comprising a visible-light sight and the dual-light front sighting device of any one of claims 1 to 8 assembled in front of the visible-light sight.

10. A method for installing and adjusting the dual-light front sighting device of any one of claims 1 to 8, comprising:

determining the focal length of the infrared objective lens and the diagonal size of the target surface of the infrared detector depending on magnitudes required by a field of view;
according to a matching requirement of a dual-light field of view, determining the focal length of the collimating lens and the diagonal size of the display region of the OLED based on the relation among the focal length of the infrared objective lens, the diagonal size of the target surface of the infrared detector, and the visual magnification;
performing optical fusion using the beamsplitter such that the infrared image and the visible light image can be seen at the same time; and
calibrating the position and image height of the infrared image to allow the infrared image to match the visible light image.

visible light path → visible light → beamsplitter ⌒15 → fused → sight ⌒20

infrared light path → infrared light singnals-electrical singnals-lights

FIG.1

⌒11

infrared light → infrared objective lens assembly (110) → infrared core module (112)

image processing module ⌒12    power assembly ⌒19

operation assembly ⌒14    installation assembly ⌒17

visible light → first protective window (161) → 15 → second protective window (162) → visible-light sight

collimating lens (18)

display module (13)

FIG.2

112 — infrared core module

110 — infrared objective lens assembly

12 — image processing module

19 — power assembly

14 — operation assembly

17 — installation assembly

161 — first protective window

15 — beamsplitter

162 — second protective window

visible light

infrared light

visible-light sight

18 — collimating lens

13 — display module

FIG.3

11

110 — infrared objective lens assembly

112 — infrared core module

infrared light

12 — image processing module

19 — power assembly

14 — operation assembly

17 — installation assembly

161 — first protective window

15A

162 — second protective window

visible light

visible-light sight

18 — collimating lens

13 — display module

FIG.4

FIG.5

FIG.6

| | | | S11 |
| determining the focal length of the infrared objective lens and the diagonal size of the target surface of the infrared detector depending on magnitudes required by a field of view | | | |

| according to a matching requirement of a dual-light field of view, determining the focal length of the collimating lens and the diagonal size of the display region of the OLED based on the relation among the focal length of the infrared objective lens, the diagonal size of the target surface of the infrared detector, and the visual magnification | S12 |

| performing optical fusion using the beamsplitter such that the infrared image and a visible light image can be seen at the same time | S13 |

| calibrating the position and image height of the infrared image to allow the infrared image to match the visible light image | S14 |

<table>
<tr><td colspan="2" align="center">**INTERNATIONAL SEARCH REPORT**</td><td colspan="2">International application No.<br>**PCT/CN2022/115090**</td></tr>
</table>

**A. CLASSIFICATION OF SUBJECT MATTER**

H04N 5/225(2006.01)i; H04N 5/33(2006.01)i; H04N 7/18(2006.01)i; G02B 23/04(2006.01)i

According to International Patent Classification (IPC) or to both national classification and IPC

**B. FIELDS SEARCHED**

Minimum documentation searched (classification system followed by classification symbols)

H04N; G02B

Documentation searched other than minimum documentation to the extent that such documents are included in the fields searched

Electronic data base consulted during the international search (name of data base and, where practicable, search terms used)

CNTXT, CNABS, CNKI, DWPI, VEN, USTXT, EPTXT, JPTXT, WOTXT, IEEE, 百度, BAIDU: 瞄准, 望远, 夜视, 红外, 可见光, 白光, 微光, night vision, telescope, aiming, infrared light, visible light, glimmer

**C. DOCUMENTS CONSIDERED TO BE RELEVANT**

| Category* | Citation of document, with indication, where appropriate, of the relevant passages | Relevant to claim No. |
|---|---|---|
| PX | CN 114205505 A (HEFEI YINGRUI SYSTEM TECHNOLOGY CO., LTD.) 18 March 2022 (2022-03-18)<br>claims 1-10 | 1-10 |
| X | CN 107045208 A (ZHEJIANG HONGPU TECHNOLOGY CO., LTD.) 15 August 2017 (2017-08-15)<br>description, paragraphs [0025]-[0038], and figure 1 | 1-10 |
| X | CN 206670799 U (ZHEJIANG HONGPU TECHNOLOGY CO., LTD.) 24 November 2017 (2017-11-24)<br>description, paragraphs [0021]-[0034], and figure 2 | 1-10 |
| X | CN 103279938 A (KUNMING INSTITUTE OF PHYSICS) 04 September 2013 (2013-09-04)<br>description, paragraphs [0031]-[0057], and figures 1-5 | 1-10 |
| X | CN 110632751 A (HEFEI YINGRUI SYSTEM TECHNOLOGY CO., LTD.) 31 December 2019 (2019-12-31)<br>description, paragraphs [0028]-[0062], and figures 1-4 | 1-10 |
| X | US 2008302966 A1 (REED Matthew W et al.) 11 December 2008 (2008-12-11)<br>description, paragraphs [0016]-[0030], and figures 1-5 | 1-10 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 October 2022** | **18 November 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2022/115090** |

**C. DOCUMENTS CONSIDERED TO BE RELEVANT**

| Category* | Citation of document, with indication, where appropriate, of the relevant passages | Relevant to claim No. |
| --- | --- | --- |
| X | US 5497266 A (LITTON SYSTEMS, INC.) 05 March 1996 (1996-03-05) description, column 3, line 54 to column 9, line 27, and figures 1-6 | 1-10 |
| A | CN 102789114 A (INSTITUTE OF MICROELECTRONICS OF CHINESE ACADEMY OF SCIENCES) 21 November 2012 (2012-11-21) entire document | 1-10 |
| A | US 5946132 A (ITT CORP.) 31 August 1999 (1999-08-31) entire document | 1-10 |

Form PCT/ISA/210 (second sheet) (January 2015)

**INTERNATIONAL SEARCH REPORT**
Information on patent family members

International application No.

**PCT/CN2022/115090**

| Patent document cited in search report | | | Publication date (day/month/year) | Patent family member(s) | | | Publication date (day/month/year) |
|---|---|---|---|---|---|---|---|
| CN | 114205505 | A | 18 March 2022 | None | | | |
| CN | 107045208 | A | 15 August 2017 | None | | | |
| CN | 206670799 | U | 24 November 2017 | None | | | |
| CN | 103279938 | A | 04 September 2013 | CN | 103279938 | B | 28 December 2016 |
| CN | 110632751 | A | 31 December 2019 | CN | 210982902 | U | 10 July 2020 |
| US | 2008302966 | A1 | 11 December 2008 | US | 2010277595 | A1 | 04 November 2010 |
| | | | | US | 2009200468 | A1 | 13 August 2009 |
| | | | | US | 7541581 | B2 | 02 June 2009 |
| | | | | US | 7755047 | B2 | 13 July 2010 |
| | | | | US | 7842921 | B2 | 30 November 2010 |
| US | 5497266 | A | 05 March 1996 | None | | | |
| CN | 102789114 | A | 21 November 2012 | CN | 102789114 | B | 15 July 2015 |
| US | 5946132 | A | 31 August 1999 | None | | | |

Form PCT/ISA/210 (patent family annex) (January 2015)